# EUROPEAN PATENT SPECIFICATION

(11) **EP 4 693 023 B1**
(45) Date of publication and mention of the grant of the patent: **04.11.2026**
(21) Application number: 24193361.3
(22) Date of filing: 07.08.2024
(51) Int. Cl.: G06F 8/41

(54) **SYSTEM AND METHOD FOR IMPROVING SPEED AND REDUCING ENERGY CONSUMPTION OF THE EXECUTION OF A COMPUTER PROGRAM**
SYSTEM UND VERFAHREN ZUR GESCHWINDIGKEITSVERBESSERUNG UND REDUZIERUNG DES ENERGIEVERBRAUCHS DER AUSFÜHRUNG EINES COMPUTERPROGRAMMS
SYSTÈME ET PROCÉDÉ POUR AMÉLIORER LA VITESSE ET RÉDUIRE LA CONSOMMATION D'ÉNERGIE DE L'EXÉCUTION D'UN PROGRAMME INFORMATIQUE

(43) Date of publication of application: 11.02.2026
(73) Proprietor: Daisytuner GmbH, 35583 Wetzlar (DE)
(72) Inventor: Trümper, Lukas, 35583 Wetzlar (DE)
(74) Representative: Köllner, Malte

(56) References cited:
- TRÜMPER LUKAS ET AL: "Performance Embeddings: A Similarity-Based Transfer Tuning Approach to Performance Optimization", PROCEEDINGS OF THE 2023 CHI CONFERENCE ON HUMAN FACTORS IN COMPUTING SYSTEMS, ACMPUB27, NEW YORK, NY, USA, 21 June 2023 (2023-06-21), pages 50 - 62, XP059145354, ISBN: 979-8-4007-0095-8, DOI: 10.1145/3577193.3593714
- RIYADH BAGHDADIMASSINISSA MEROUANIMOHAMED-HICHAM LEGHETTASKAMEL ABDOUSTAHA ARBAOUIKARIMA BENATCHBASAMAN AMARASINGHE: "Proceedings of Machine Learning and Systems", vol. 3, 2021, article "A Deep Learning Based Cost Model for Automatic Code Optimization", pages: 181 - 193, XP002812865
- NICOLAS VASILACHE ET AL: "Tensor Comprehensions: Framework-Agnostic High-Performance Machine Learning Abstractions", ARXIV.ORG, CORNELL UNIVERSITY LIBRARY, 201 OLIN LIBRARY CORNELL UNIVERSITY ITHACA, NY 14853, 13 February 2018 (2018-02-13), XP081235666

## Description

### FIELD OF THE INVENTION

The presented invention relates to compiler optimisation, more specifically, to a method for improving the speed and reducing the energy consumption of the execution of a computer program, as well as to a corresponding system, computer program, computer-readable medium, and data processing apparatus.

### BACKGROUND OF THE INVENTION

Compiler optimisation plays a critical role in enhancing the efficiency of software applications by refining the code generated during compilation. This process is vital for saving time and energy, making it a cornerstone of modern computing. Firstly, optimised code runs faster, directly translating into reduced execution time. This is particularly crucial in time-sensitive applications such as real-time systems where processing speed is paramount. Secondly, compiler optimisations help in reducing the power consumption of a program. More efficient code requires fewer CPU cycles to execute, which means lower energy consumption and extended battery life in portable devices like smartphones and laptops. Moreover, optimisations can lead to substantial economic savings and contribute to environmental sustainability in large-scale data centres, where energy costs are significant.

### DESCRIPTION OF RELATED ART

When compiling a computer program's source code into machine instructions, the typical steps are to first translate the source code into an abstract syntax tree and then translate the abstract syntax tree into a so-called intermediate representation of the program. The intermediate representation is then usually translated into machine instructions.

Methods have been proposed to optimise the intermediate representation for reduced time and energy consumption during the execution of the computer program. Segments of the intermediate representation can be transformed, e.g., loops interchanged, for better performance. This can be achieved either by looking up suitable transformations in a database (see, e.g., Lukas Trümper, Tal Ben-Nun, Philipp Schaad, Alexandru Calotoiu, and Torsten Hoefler: "Performance Embeddings: A Similarity-Based Transfer Tuning Approach to Performance Optimization"; Proceedings of the 37th International Conference on Supercomputing (ICS '23), pages 50-62, 2023; https://doi.org/10.1145/3577193.3593714) or by transforming the segments using an artificial neural network (see e.g., Riyadh Baghdadi, Massinissa Merouani, Mohamed-Hicham LEGHETTAS, Kamel Abdous, Taha Arbaoui, Karima BENATCHBA, and Saman Amarasinghe. 2021. A Deep Learning Based Cost Model for Automatic Code Optimization. In Proceedings of Machine Learning and Systems, A. Smola, A. Dimakis, and I. Stoica (Eds.), Vol. 3. 181-193).

However, the proposed methods are not fully satisfactory in terms of performance and energy savings.

### OBJECT OF THE INVENTION

It is, therefore, an object of the presented invention to further improve time and energy savings of the execution of a computer program by optimized compiling of the source code of the computer program.

### BRIEF SUMMARY OF THE INVENTION

This aim is achieved by the inventions as claimed in the independent claims. Advantageous embodiments are described in the dependent claims. The use of the singular shall not exclude the plural, which shall also apply in the reverse sense unless otherwise indicated.

The object of the invention is achieved by a method. In what follows, individual steps of the method will be described in more detail. The steps do not necessarily have to be performed in the order given in the text. Also, further steps not explicitly stated may be part of the method.

We propose a computer-implemented method for improving speed and reducing energy consumption in the execution of a computer program, comprising the following steps:
Receiving a source code of the computer program.

Translating the source code into an intermediate representation of the computer program suitable for compiling the source code into a set of machine instructions for execution by a processor. Typically, to translate the source code into an intermediate representation, the source code is first translated into the so-called abstract syntax tree. These are well-known approaches.

A database of known transformation rules for segments of computer programs in intermediate representation is provided to optimise execution. The database consists of entries with a key and a transformation rule.

In order to effectively use the database, the intermediate representation of the computer program is subdivided into at least one segment.

In order to retrieve transformation rules from the database, a key is computed for at least one of the segments of the intermediate representation of the computer program and a metric is determined to compare the similarity of the key of the at least one segment with the keys in the database.

We then search for the at least one segment of the intermediate representation of the computer program for the entry in the database with the highest similarity according to the key and the metric.

Once we find the entry with the highest similarity in the database, we retrieve its transformation rule that has proven efficient.

Once retrieved, we apply the corresponding transformation rule to the at least one segment of the intermediate representation of the computer program to obtain a transformed intermediate representation.

Subsequently, we translate the transformed intermediate representation of the computer program into machine instructions for execution by the processor. In other words, the compiling can be completed based on an improved intermediate representation, leading to higher time and energy efficiency.

To measure the performance of the transformation rule, we insert instructions into the at least one segment.

If the measured performance during the execution of the at least one segment is lower than a predetermined threshold, we generate at least one new transformation rule to improve execution performance for this at least one segment. For instance, the threshold can be set to a predetermined percentage of the maximum performance of the processor, below which the performance is deemed unsatisfactory.

The generation of at least one new transformation rule for this at least one segment comprises the following steps:
- defining a space of admissible transformation rules for the at least one segment;
- defining a tuple of possible transformation types, wherein the transformation types correspond to the dimensions of the space of admissible transformation rules;
- mapping the specific transformations of a certain transformation type to the values of the corresponding space dimension,
- whereby a vector in the space of admissible transformation rules corresponds to a transformation rule, where the transformations of each dimension are applied in the order of the space's dimensions;
- searching for a new, more performant transformation rule using a search method.

Several possibilities exist for the search method. E.g., in an evolutionary optimisation process, a new transformation rule would be generated from existing transformation rules by mutation, cross-over and selection.

The newly generated transformation rule is applied to the at least one segment of the intermediate representation of the computer program.

The performance of the applied transformation rule is measured by the execution of the compiled computer program on the processor.

In case of improved speed and/or reduced energy consumption, the database is updated by storing the key of the at least one segment and the newly generated transformation rule as new entry in the database.

Subsequently, the computer program is recompiled using either the newly generated transformation rule or the updated database.

The proposed methods will lead to an automatically improving compiler. Such a compiler has proven to dramatically improve execution efficiency in terms of time and energy savings. Energy savings by 50% or an order of magnitude have been observed.

The method described so far can be implemented as a stand-alone compiler. Users would buy or download the compiler and run it on their computer systems. However, the proposed method can also be delivered as an online software-as-a-service.

The database consists of entries with a key and a transformation rule. To retrieve suitable transformation rules from the database, a key must be defined for each segment as well as a similarity metric to compare two keys for similarity.

To compute the key for a segment and to compare two keys, the following steps are preferably performed:
- The segment is represented as control flow and data flow graphs.
- A vector of features is computed for the segment as its key, summarising properties of the control flow and data flow graphs.
- The inverse of the distance of two keys is defined as the similarity metric. For instance, the inverse of the Euclidean is a suitable distance.

To compute the key for a segment, the segment represented in the intermediate representation is preferably first translated into control flow and data flow graphs, each containing nodes and edges and annotations to the nodes and edges. The graphs should comprise the following information:
- which instructions are executed and in which order;
- which subset of data elements are read and written by each instruction;
- how often each instruction is executed.

For instance, the stateful dataflow multigraph could represent segments as combined control flow and data flow graphs according to those requirements. The information about how often an instruction is executed may depend on the program's input and thus be unknown during compilation. In this case, the information may be collected by executing the program on input data once (see e.g. US 7,120,906 B1).

Based on this representation as control flow and data flow graphs, there are several possibilities for defining the vector of features:
- The graphs can be used to compute properties such as the total number of executed instructions and the total volume of data reads and writes.
- The memory access behaviour can be simulated based on the graphs and a model of the processor's memory. For instance, the simulation can provide statistics on the utilisation of the processor's caches.
- A machine learning algorithm like a graph neural network could be trained to predict performance properties such as the runtime based on the graphs. In this case, an output of the artificial neural network's hidden layers might be used as the feature vector, i.e., an embedding produced by the neural network.

Different possibilities including the above methods have been described in Lukas Trümper, Tal Ben-Nun, Philipp Schaad, Alexandru Calotoiu, and Torsten Hoefler: "Performance Embeddings: A Similarity-Based Transfer Tuning Approach to Performance Optimization"; Proceedings of the 37th International Conference on Supercomputing (ICS '23), pages 50-62, 2023; https://doi.org/10.1145/3577193.3593714.

The database of known transformation rules and the newly generated transformation rules are specific to individual classes of processors. Each processor or CPU has its own architecture requiring suitably adapted machine instructions. Therefore, the provided database and the updated databases are processor-specific.

As mentioned above, to generate a new transformation rule for a given segment, a space of admissible transformation rules is defined:
- A tuple of possible transformation types must be defined, e.g., *(loop tiling, loop permutation, loop vectorisation, loop parallelisation),* where
   - loop tiling describes all possible tilings of all loops inside the segment, i.e., loop tiling is a well-known transformation type, which splits a loop into an inner and an outer loop, yielding the same semantics.
   - loop permutation describes all possible permutations of all loops and tiled loops inside the segment, i.e., loop permutation or loop interchange is a common transformation to improve the performance of a loop-based code.
   - loop vectorisation describes all possible vectorisations of all loops and tiled loops. Vectorisation is a common transformation that utilises a processor's vector registers.
   - loop parallelisation describes all possible parallelisation of the loops and tiled loops. Loop parallelisation is a common transformation that simultaneously executes different loop iterations on different processor cores.
- The tuple corresponds to the dimensions of the space of admissible transformation rules.
- The specific transformations of a certain transformation type must be mapped to the values of the corresponding space dimension. For instance, all possible loop permutations can be enumerated and numbered accordingly.
- Hence, a vector in the space of admissible transformation rules corresponds to a transformation rule, where the transformations of each dimension are applied in the order of the space's dimensions.
- The vector corresponding to a transformation rule may be stored in the database as well to simplify the lookup of it for a given rule.

Since the transformation rule space might grow exponentially in specific dimensions, an exhaustive search might typically be infeasible. The space can be searched by different methods, e.g., using an evolutionary algorithm:
- Given the segment, an initial population is defined as a set of vectors in the admissible transformation rule space. The population might be derived from the top-k most similar segments of the database and their transformation rules.
- The fitness of the population's individuals is tested by applying the corresponding transformation rule of the vector to the segment and measuring the transformed segment's performance during execution for each individual.
- Based on the fitness, mutation and cross-over operations convert the population into a new one. The new population is often called the offspring. These are well-known techniques.
- Based on the offspring, the search continues until a predetermined number of generations has been evaluated.
- The new transformation rule for the given segment is determined by the individual with the highest fitness.

During the execution of the proposed methods, measurement data is produced reflecting the performance of different transformation rules for certain code segments on specific processors. These data can be stored in a performance database or in an extension of the database of transformation rules. The stored data can be used to refine the similarity metric. For example, if the suggested transformation rule is not beneficial, the similarity metric may incorrectly indicate a similarity in the performance properties of two segments. Based on this data, an artificial neural network could be retrained to improve the similarity estimation.

The object of the invention is also achieved by a computer program comprising instructions, which, when executed by a computer, causes the computer to carry out the described method.

The same applies to a computer-readable medium having stored the just described computer program.

Any of the described methods can be run either on a single computer, on a network of computers, or in the cloud. When offering compilation as a service, the following division of tasks between the client and their processor, as well as the computer infrastructure and a suitable processor on the side of the service provider, is advantageous.

The client has at least one processor for executing the computer program.

The client also disposes of a compiler, which translates the source code of the computer program into machine instructions for execution by the client's processor.

On the service provider's side, a database server provides a database of known transformation rules for segments of computer programs in intermediate representation to optimise execution.

The optimisation search is done on the side of the service provider on at least one evaluation server. To this end, the evaluation server comprises a processor corresponding to the at least one client processor. This guarantees that the optimisation is processor-specific and adapted to the hardware of the client.

Consequently, the step of measuring the performance during the execution of the at least one segment transformed by the newly generated transformation rule is performed on the evaluation server.

This means that the optimisation is executed on the side of the compilation service provider. Only the results, in the form of an improved transformation rule or in the form of an improved intermediate representation, are transmitted to the client.

### BRIEF DESCRIPTION OF THE DRAWINGS

Other objects and advantages of the presented invention may be ascertained by reading the specification and appended claims in conjunction with the drawings. For a complete understanding of the presented invention, reference is established to the following description of embodiments made in connection with accompanying drawings. The possibilities to solve the problem are not limited to the embodiments. The exemplary embodiments are shown schematically in the figures. The same reference numerals in the individual figures designate the same or functionally identical concerning their functions and corresponding elements. In detail, the figures show:
- Fig. 1: shows an example of a program in the C programming language;
- Fig. 2: shows an example of the program in the LLVM intermediate representation;
- Fig. 3: shows an example of a segment as a stateful dataflow multigraph;
- Fig. 4: shows the program in the LLVM intermediate representation after applying a transformation rule to the segment
- Fig. 5: shows an example of the space of admissible transformation rules for the segment;
- Fig. 6: gives a rough overview of the described method;
- Fig. 7: shows a database of transformation rules for optimisation of segments in intermediate representation including keys.

### DETAILED DESCRIPTION OF THE INVENTION

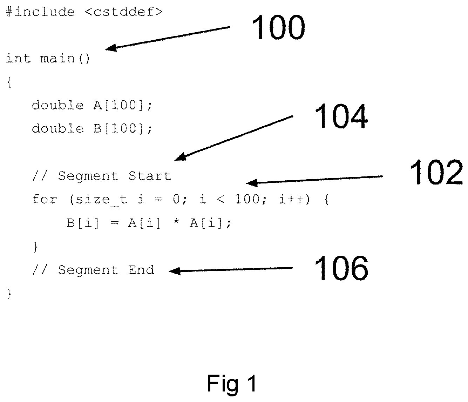

Fig. 1 depicts a program in the programming language C. The program 100 starts with the main function. The main part of the program is loop 102, which iterates with an iteration variable i from 0 to 99. In each iteration of the loop 100, an element of array B at index i is updated by multiplying the element of array A at index i with itself. The loop 102 is marked by a starting comment 104 and an ending comment 106 for convenience. The figure shows a typical source code that can be optimised by our method.

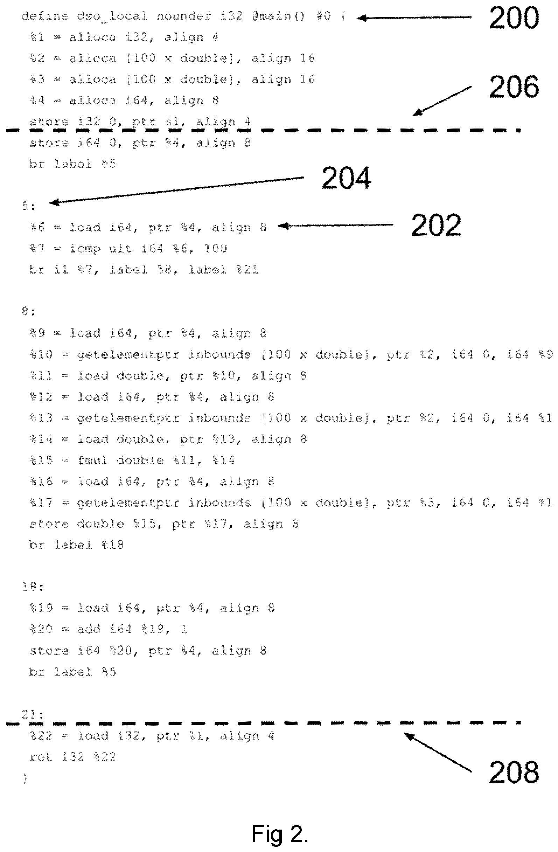

Fig. 2 shows the program depicted in Fig. 1 in the LLVM intermediate representation. The program 200 starts with the definition of a main function. The program 200 consists of instructions 202 and labelled blocks 204, which group multiple instructions. Loop 102, as defined in Fig. 1, is marked by two horizontal lines, where line 206 marks the beginning and line 208 marks the end. The representation of the program in an intermediate representation is a necessary step towards optimisation using the proposed method. The choice of the LLVM intermediate representation is one possible intermediate representation. Conversion from the C program to the LLVM intermediate representation can be achieved using known methods, such as the LLVM compiler infrastructure. The LLVM compiler infrastructure provides several automatic methods to detect potential segments like loops.

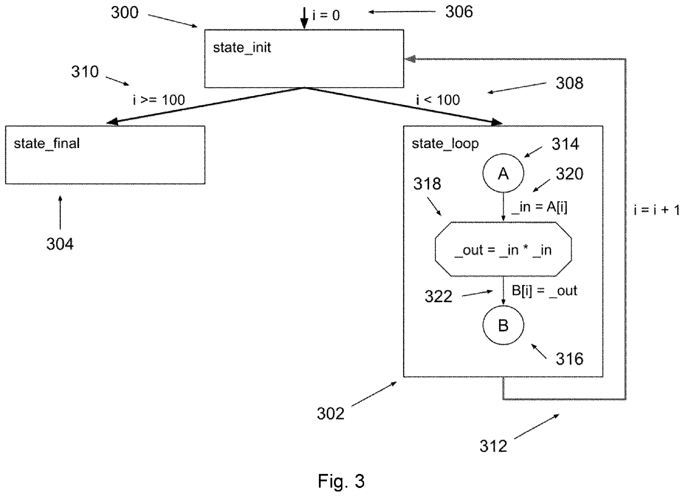

Fig. 3 illustrates a stateful dataflow multigraph corresponding to the loop of Fig. 1 and Fig. 2, respectively. The stateful dataflow multigraph consists of three states: state_init 300, state_loop 302, and state_final 304. state_init 300 is entered initially by an initial edge 306, setting the variable i to 0. If the variable i is lower than 100, state_init 300 transitions to state_loop 302 via the conditional edge 308. If the variable i is not lower than 100, the terminal state state_final 304 is entered with the conditional edge 310. The state_loop 302 describes a data flow graph consisting of the array A 314, array B 316 and an operator 318. Array A 314 is connected to the operator 318 via an edge 320, setting the variable _in to the element of Array A 314 read at index i. Operator 318 is connected to array B 318 via edge 322, writing the variable _out into array B 318 at index i. The data flow graph described by state_loop 302 is executed every time this state is entered. After leaving state_loop 302, an edge 312 connects it back to state_init 300, incrementing the variable i by one.

A stateful dataflow multigraph can be derived from a segment in LLVM intermediate representation or other representations using known methods (see, Alexandru Calotoiu, Tal Ben-Nun, Grzegorz Kwasniewski, Johannes de Fine Licht, Timo Schneider, Philipp Schaad, and Torsten Hoefler. 2022. Lifting C semantics for dataflow optimization. In Proceedings of the 36th ACM International Conference on Supercomputing (ICS '22). Association for Computing Machinery, New York, NY, USA, Article 17, 1-13. https://doi.org/10.1145/3524059.3532389). The stateful dataflow multigraph is one possibility for defining the control flow and data flow graphs used to compute a vector of features from the segment.

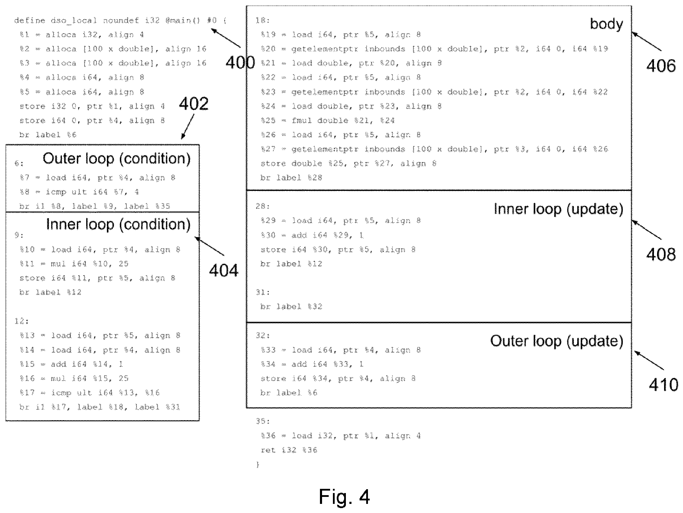

Fig. 4 shows the program in the LLVM intermediate representation after applying a transformation rule to the segment. The program 400 starts with a definition of the main function. The original loop 200 of Fig. 2 is split into two loops defined by an outer loop condition 402, an inner loop condition 404, a body 406, an inner loop update 408 and an outer loop update 410. The two loops are semantically equivalent to loop 200, but split the range from 0 to 100 into two loops iterating from 0 to 4 and an inner loop iterating over tiles of size 25. This split of loop 200 results from a transformation rule applying a 1D tiling of the loop. This is a well-known type of transformation that makes memory access patterns more cache-friendly or prepares further transformations such as parallelisation and vectorisation.

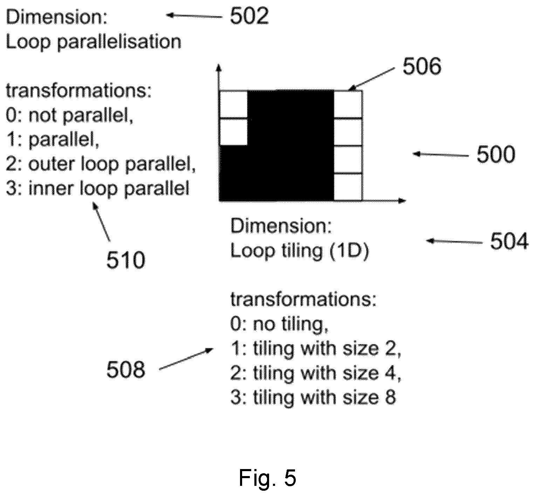

Fig. 5 illustrates a two-dimensional space of admissible transformation rules. The two-dimensional space 500 is shown in a 2D plot with discrete points 506, either coloured black or white. The first axis 504 represents the dimension of the "Loop tiling" transformation type. The second axis 502 represents the dimension of the "Loop parallelisation" transformation type. The transformation to value mapping 508 for the first axis is shown. The transformation to value mapping 510 for second axis is also shown. The figure shows that several points in this space are admissible (black), while other points are not (white). For instance, a point (1, 1) in this vector space corresponds to the transformation rule of applying a loop tiling with size 2 and transforming the new outer and new inner loops into parallel loops. The depicted space is an example of a space of admissible transformation rules and may be different for more transformation types and other types of segments.

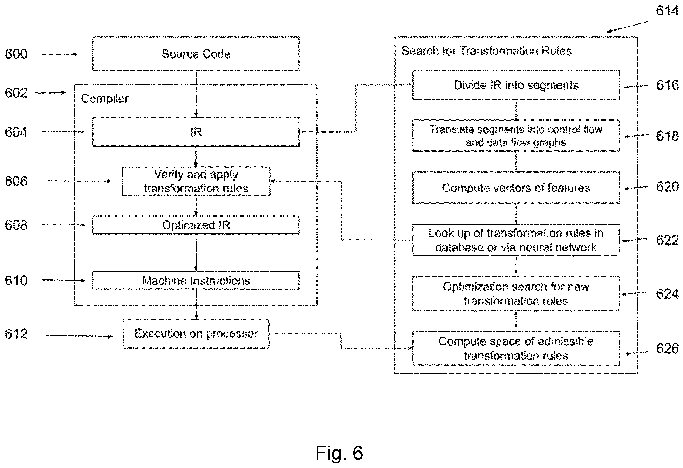

Fig. 6 presents an overview of the described method. The method receives a source code 600 representing a program in a programming language such as C. The program described in Fig. 1 is a possible input. Fig. 6 describes several stages to be executed.

First of all, the source code is translated into an intermediate representation 604 in a compiler 602, such as the LLVM intermediate representation shown in Fig. 2. This translation may involve several steps, such as first translating into an abstract syntax tree.

The program in the intermediate representation is passed into the search for the transformation rules of segments 614 and into the stage 606, where the later found transformation rules are verified and applied. The existing infrastructure for applying and verifying transformation rules can be used since the transformation rules consist of well-known transformation types supported by typical compilers.

The search for the transformation rule starts with dividing the intermediate representation into segments 616. Possible segments might be disjoint regions containing loops. Standard loop detection algorithms can be used. The segments are passed into a stage 618, where each segment is converted into control flow and data flow graphs, e.g., a stateful dataflow multigraph.

For each set of graphs, vectors of features are computed encoding performance properties 620. Based on the vectors of features representing the segments, a transformation rule is looked up for each segment 622 to be applied by the compiler in the previously explained stage 606.

The transformation rules are applied to each segment in the previously mentioned stage 606. The completion of the stage yields an optimised intermediate representation of the initial program 606. The optimised intermediate representation is further compiled into machine instructions 610, which include instructions for measuring the performance of each transformed segment. The machine instructions are executed on the processor 612, and the performance is measured for each transformed segment.

Based on an assessment of the performance, each segment with unsatisfying performance is forwarded to the stage of computing the space of admissible transformation rules 626. The space of admissible transformation rules is computed, and an optimisation search for a new transformation rule is carried out for each segment 624. The look-up of transformation rules is updated based on the new transformation rules, e.g., the database entry is updated.

Once convergence of the performance has been reached, the search is ended. The final version of the complied program is then passed on to execution or storage.

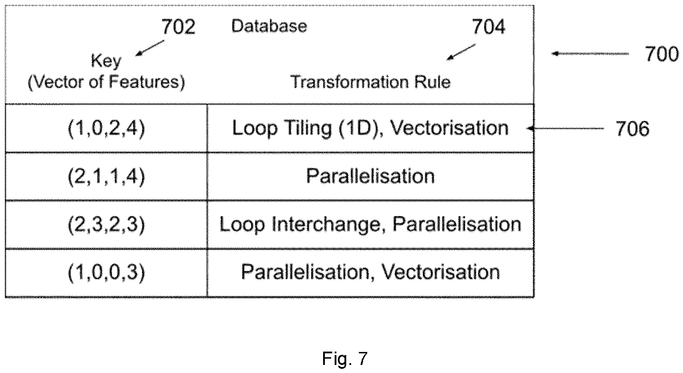

Fig. 7 shows a database for optimisation of segments in intermediate representation. The database 700 has two columns. The first column 702 holds the keys and the second column 704 stores the corresponding transformation rules. For instance, an entry 706 holds a key (1, 0, 2, 4) and a transformation rule "Loop Tiling (1D), Vectorisation".

For a segment, a transformation rule can be found by computing its key according to the presented methods and comparing this key with the keys of the database for similarity. The entry with highest similarity may suggest the transformation rule to apply. It should be noted that typically the database does not store the segments directly. It is sufficient to store the keys, since they are used to find the entry and the transformation rule must be verified on the segment by the compiler separately. Storing the original segment of an entry, for which the key and the transformation rule were derived, is not necessary but optional to update entries.

### Glossary

### Abstract syntax tree

An abstract syntax tree (AST) is a data structure used in computer science to represent the structure of a program or code segment. It is a tree representation of the abstract syntactic structure of the source code written in a formal language. Each node of the tree denotes a construct occurring in the source code.

### Control flow graph

In computer science, a control flow graph (CFG) represents, using graph notation, all paths that might be traversed through a program during its execution.

### Data flow graph

A data flow graph is a way of representing a flow of data through a process or a computer program. The data-flow graph also provides information about the outputs and inputs of each entity and the process itself. A data flow graph has no control flow - no conditional branches or loops. For each data flow, at least one of the endpoints (source and/or destination) must exist in a process.

### Intermediate representation

An intermediate representation (IR) is the data structure or code used internally by a compiler to represent source code. It is designed to facilitate further processing, such as optimisation and translation.

### LLVM intermediate representation

LLVM intermediate representation is a language-independent intermediate representation (IR) that serves as a portable, high-level assembly language that can be optimized with a variety of transformations over multiple passes. The name LLVM originally stood for Low Level Virtual Machine. LLVM is designed for compile-time, link-time, runtime, and "idle-time" optimisation.

### Stateful dataflow multigraph

A stateful dataflow multigraph represents a computer program combining control flow and data flow graphs. A stateful dataflow multigraph consists of a control flow graph in which each node is a state. The state defines a data flow graph executed when the state is entered.

### Reference numbers

- 100: Program
- 102: Loop
- 104: Comment: Segment Start
- 106: Comment: Segment End

- 200: Program
- 202: Instruction
- 204: Labelled Block
- 206: Loop Start
- 208: Loop End

- 300: state_init
- 302: state_loop
- 304: state_final
- 306: Initial Edge
- 308: Conditional Edge - Loop
- 310: Conditional Edge - Exit
- 312: Update Edge
- 314: Array A
- 316: Array B
- 318: Operator
- 320: Read Edge
- 322: Write Edge

- 400: Program
- 402: Outer loop (condition)
- 404: Inner loop (condition)
- 406: body
- 408: Inner loop (update)
- 410: Outer loop (update)

- 500: Space of admissible transformation rules
- 502: Dimension: Loop parallelisation
- 504: Dimension: Loop tiling (1D)
- 506: Point in the space
- 508: Transformations of dimension 1
- 510: Transformations of dimension 2

- 600: Step: Source Code
- 602: Group: Compiler
- 604: Step: IR
- 606: Step: Verification and Application of Transformation Rules
- 608: Step: Optimized IR
- 610: Step: Machine Instructions
- 612: Step: Execution on processor
- 614: Group: Search for Transformation Rules
- 616: Step: Division of IR into segmentss
- 618: Step: Translation into control flow and data flow graphs
- 620: Step: Computation of vectors of features
- 622: Step: Look up of transformation rules in a database or via neural network
- 624: Step: Optimization search for new transformation rules
- 626: Step: Computation of the space of admissible transformation rules

- 700: Database
- 702: Column: Key (Vector of Features)
- 704: Column: Transformation Rule
- 706: Entry: Key and transformation rule

### Cited literature

### Patent literature

US 7,120,906 B1

### Non-patent literature

Lukas Trümper, Tal Ben-Nun, Philipp Schaad, Alexandru Calotoiu, and Torsten Hoefler: "Performance Embeddings: A Similarity-Based Transfer Tuning Approach to Performance Optimization"; Proceedings of the 37th International Conference on Supercomputing (ICS '23), pages 50-62, 2023; https://doi.org/10.1145/3577193.3593714.

Riyadh Baghdadi, Massinissa Merouani, Mohamed-Hicham LEGHETTAS, Kamel Abdous, Taha Arbaoui, Karima Benatchba, and Saman Amarasinghe: "A Deep Learning Based Cost Model for Automatic Code Optimization". Proceedings of Machine Learning and Systems, A. Smola, A. Dimakis, and I. Stoica (Eds.), 2021, Vol. 3. 181-193.

Tal Ben-Nun, Johannes de Fine Licht, Alexandros N. Ziogas, Timo Schneider, and Torsten Hoefler.: "Stateful dataflow multigraphs: a data-centric model for performance portability on heterogeneous architectures". Proceedings of the International Conference for High Performance Computing, Networking, Storage and Analysis (SC '19). Association for Computing Machinery, New York, NY, USA, 2019, Article 81, 1-14. https://doi.org/10.1145/3295500.3356173

Alexandru Calotoiu, Tal Ben-Nun, Grzegorz Kwasniewski, Johannes de Fine Licht, Timo Schneider, Philipp Schaad, and Torsten Hoefler: "Lifting C semantics for dataflow optimization". Proceedings of the 36th ACM International Conference on Supercomputing (ICS '22). Association for Computing Machinery, New York, NY, USA, 2022, Article 17, 1-13. https://doi.org/10.1145/3524059.3532389

## Claims

1. Computer-implemented method for improving speed and reducing energy consumption on the execution of a computer program, comprising the following steps:
- receiving a source code (600) of the computer program;
- translating the source code (600) into an intermediate representation (604) of the computer program suitable for compiling the source code (600) into a set of machine instructions for execution by a processor;
- providing a database of known transformation rules for segments of computer programs in intermediate representation for optimisation of execution;
- wherein the database consists of entries with a key and a transformation rule;
- dividing (616) the intermediate representation of the computer program into at least one segment;
- computing a key for the at least one segment of the intermediate representation (604) of the computer program and determining a metric for comparing the similarity of the key of the segment with the keys in the database;
- for the at least one segment of the intermediate representation (604) of the computer program searching for the entry in the database with the highest similarity according to the metric;
- for the at least one segment of the intermediate representation (604) of the computer program looking up the transformation rule in the database corresponding to the entry with the highest similarity according to the metric;
- applying (606) the corresponding transformation rule to the at least one segment of the intermediate representation (604) of the computer program to obtain a transformed intermediate representation;
- translating (610) the transformed intermediate representation of the computer program into machine instructions for execution (612) by the processor;
**characterized by**
- inserting instructions into the at least one segment for measuring the performance of the execution of the at least one segment;
- measuring the performance of the execution of the at least one segment;
- if the measured performance during execution of the at least one segment is lower than a predetermined threshold, generating at least one new transformation rule to improve the performance of execution for this at least one segment; wherein the generation of at least one new transformation rule for this at least one segment comprises the following steps:
- defining a space of admissible transformation rules (626) for the at least one segment;
- defining a tuple of possible transformation types, wherein the transformation types correspond to the dimensions of the space of admissible transformation rules;
- mapping the specific transformations of a certain transformation type to the values of the corresponding space dimension,
- whereby a vector in the space of admissible transformation rules corresponds to a transformation rule, where the transformations of each dimension are applied in the order of the space's dimensions;
- searching for a new, more performant transformation rule using a search method;
- applying (606) the newly generated transformation rule to the at least one segment of the intermediate representation of the computer program;
- measuring the performance of the execution (612) of the at least one segment transformed by the newly generated transformation rule during the execution of the compiled computer program (610) on the processor;
- in case of improved speed and/or reduced energy consumption, updating the database by storing the key of the at least one segment and the newly generated transformation rule as new entry in the database;
- compiling the computer program using the newly generated transformation rule and/or the updated database.

2. Method according to the preceding claim,
**characterized by**
- translating the segments of the intermediate representation (604) of the computer program into control flow graphs and data flow graphs, each containing nodes and edges and annotations to the nodes and edges;
- computing a vector of features for each segment as its key, summarising properties of the control flow and data flow graphs;
- computing the similarity of two segments represented by two corresponding keys as the inverse of a distance between the two vectors of features.

3. Method according to any of the preceding claims,
**characterized by**
providing a specific database of known transformation rules for segments of computer programs in intermediate representation to optimise execution performance for each class of processors.

4. Method according to any of the preceding claims,
**characterized by**
storing the results of the measurements of the performance of execution of the segments on
the processor in a performance database specific to the processor.

5. A computer program comprising instructions which, when the program is executed by a computer, causes the computer to carry out the method according to any of the preceding method claims.

6. A computer-readable medium having stored thereon the computer program of the immediately preceding claim.

7. System for performing the method according to any of the preceding method claims, comprising:
- at least one client processor for executing the computer program;
- a compiler (602) that translates the source code of the computer program into machine instructions for execution by the client processor;
- a database server providing the database of known transformation rules for segments of computer programs in intermediate representation for optimisation of execution;
- at least one evaluation server comprising a processor corresponding to the at least one client processor;
- wherein the step of measuring the performance during the execution of the at least one segment transformed by the newly generated transformation rule is performed on the evaluation server.

## Patentansprüche

1. Computerimplementiertes Verfahren zur Erhöhung der Geschwindigkeit und zur Verringerung des Energieverbrauchs bei der Ausführung eines Computerprogramms, umfassend die folgenden Schritte:
- Empfangen eines Quellcodes (600) des Computerprogramms;
- Übersetzen des Quellcodes (600) in eine Zwischendarstellung (604) des Computerprogramms, die zum Kompilieren des Quellcodes (600) in einen Satz von Maschinenbefehlen zur Ausführung durch einen Prozessor geeignet ist;
- Bereitstellen einer Datenbank bekannter Transformationsregeln für Segmente von Computerprogrammen in Zwischendarstellung zur Optimierung der Ausführung;
- wobei die Datenbank aus Einträgen besteht, die jeweils einen Schlüssel und eine Transformationsregel aufweisen;
- Unterteilen (616) der Zwischendarstellung des Computerprogramms in mindestens ein Segment;
- Berechnen eines Schlüssels für das mindestens eine Segment der Zwischendarstellung (604) des Computerprogramms und Bestimmen einer Metrik für den Vergleich der Ähnlichkeit zwischen dem Schlüssel des Segments und den Schlüsseln in der Datenbank;
- für das mindestens eine Segment der Zwischendarstellung (604) des Computerprogramms Suchen nach dem Eintrag in der Datenbank mit der gemäß der Metrik höchsten Ähnlichkeit;
- für das mindestens eine Segment der Zwischendarstellung (604) des Computerprogramms Nachschlagen der dem Eintrag mit der gemäß der Metrik höchsten Ähnlichkeit entsprechenden Transformationsregel in der Datenbank;
- Anwenden (606) der entsprechenden Transformationsregel auf das mindestens eine Segment der Zwischendarstellung (604) des Computerprogramms, um eine transformierte Zwischendarstellung zu erhalten;
- Übersetzen (610) der transformierten Zwischendarstellung des Computerprogramms in Maschinenbefehle zur Ausführung (612) durch den Prozessor;
**gekennzeichnet durch**
- Einfügen von Befehlen in das mindestens eine Segment zum Messen der Leistung der Ausführung des mindestens einen Segments;
- Messen der Leistung der Ausführung des mindestens einen Segments;
- Erzeugen mindestens einer neuen Transformationsregel zur Verbesserung der Leistung der Ausführung dieses mindestens einen Segments, wenn die während der Ausführung des mindestens einen Segments gemessene Leistung unter einem vorbestimmten Schwellenwert liegt; wobei das Erzeugen mindestens einer neuen Transformationsregel für dieses mindestens eine Segment die folgenden Schritte umfasst:
- Definieren eines Raums zulässiger Transformationsregeln (626) für das mindestens eine Segment;
- Definieren eines Tupels möglicher Transformationstypen, wobei die Transformationstypen den Dimensionen des Raums zulässiger Transformationsregeln entsprechen;
- Abbilden der spezifischen Transformationen eines bestimmten Transformationstyps auf die Werte der entsprechenden Raumdimension,
- wobei ein Vektor im Raum zulässiger Transformationsregeln einer Transformationsregel entspricht, wobei die Transformationen jeder Dimension in der Reihenfolge der Dimensionen des Raums angewendet werden;
- Suchen nach einer neuen, leistungsfähigeren Transformationsregel unter Verwendung eines Suchverfahrens;
- Anwenden (606) der neu erzeugten Transformationsregel auf das mindestens eine Segment der Zwischendarstellung des Computerprogramms;
- Messen der Leistung der Ausführung (612) des mindestens einen durch die neu erzeugte Transformationsregel transformierten Segments während der Ausführung des kompilierten Computerprogramms (610) auf dem Prozessor;
- Aktualisieren der Datenbank im Fall einer erhöhten Geschwindigkeit und/oder eines verringerten Energieverbrauchs durch Speichern des Schlüssels des mindestens einen Segments und der neu erzeugten Transformationsregel als neuen Eintrag in der Datenbank;
- Kompilieren des Computerprogramms unter Verwendung der neu erzeugten Transformationsregel und/oder der aktualisierten Datenbank.

2. Verfahren nach dem vorhergehenden Anspruch,
**gekennzeichnet durch**
- Übersetzen der Segmente der Zwischendarstellung (604) des Computerprogramms in Kontrollflussgraphen und Datenflussgraphen, die jeweils Knoten und Kanten sowie Annotationen an den Knoten und Kanten enthalten;
- Berechnen eines Merkmalsvektors für jedes Segment als dessen Schlüssel, wobei der Merkmalsvektor Eigenschaften der Kontrollflussgraphen und Datenflussgraphen zusammenfasst;
- Berechnen der Ähnlichkeit zweier Segmente, die durch zwei entsprechende Schlüssel dargestellt werden, als Kehrwert eines Abstands zwischen den beiden Merkmalsvektoren.

3. Verfahren nach einem der vorhergehenden Ansprüche,
**gekennzeichnet durch**
Bereitstellen einer spezifischen Datenbank bekannter Transformationsregeln für Segmente von Computerprogrammen in Zwischendarstellung zur Optimierung der Leistung der Ausführung für jede Prozessorklasse.

4. Verfahren nach einem der vorhergehenden Ansprüche,
**gekennzeichnet durch**
Speichern der Ergebnisse der Messungen der Leistung der Ausführung der Segmente auf dem Prozessor in einer für den Prozessor spezifischen Leistungsdatenbank.

5. Computerprogramm, umfassend Befehle, die, wenn das Programm von einem Computer ausgeführt wird, den Computer veranlassen, das Verfahren nach einem der vorhergehenden Verfahrensansprüche auszuführen.

6. Computerlesbares Medium, auf dem das Computerprogramm nach dem unmittelbar vorhergehenden Anspruch gespeichert ist.

7. System zur Durchführung des Verfahrens nach einem der vorhergehenden Verfahrensansprüche, umfassend:
- mindestens einen Client-Prozessor zum Ausführen des Computerprogramms;
- einen Compiler (602), der den Quellcode des Computerprogramms in Maschinenbefehle zur Ausführung durch den Client-Prozessor übersetzt;
- einen Datenbankserver zum Bereitstellen der Datenbank bekannter Transformationsregeln für Segmente von Computerprogrammen in Zwischendarstellung zur Optimierung der Ausführung;
- mindestens einen Auswertungsserver, der einen dem mindestens einen Client-Prozessor entsprechenden Prozessor umfasst;
- wobei der Schritt des Messens der Leistung während der Ausführung des mindestens einen durch die neu erzeugte Transformationsregel transformierten Segments auf dem Auswertungsserver durchgeführt wird.

## Revendications

1. Procédé mis en œuvre par ordinateur pour améliorer la vitesse d'exécution et réduire la consommation d'énergie lors de l'exécution d'un programme d'ordinateur, comprenant les étapes suivantes :
- recevoir un code source (600) du programme d'ordinateur ;
- traduire le code source (600) en une représentation intermédiaire (604) du programme d'ordinateur, adaptée à la compilation du code source (600) en un ensemble d'instructions machine destinées à être exécutées par un processeur ;
- fournir une base de données de règles de transformation connues pour des segments de programmes d'ordinateur en représentation intermédiaire, en vue de l'optimisation de l'exécution ;
- la base de données étant constituée d'entrées comportant chacune une clé et une règle de transformation ;
- diviser (616) la représentation intermédiaire du programme d'ordinateur en au moins un segment ;
- calculer une clé pour ledit au moins un segment de la représentation intermédiaire (604) du programme d'ordinateur et déterminer une métrique permettant de comparer la similarité entre la clé dudit segment et les clés contenues dans la base de données ;
- rechercher, pour ledit au moins un segment de la représentation intermédiaire (604) du programme d'ordinateur, l'entrée de la base de données présentant la similarité la plus élevée selon la métrique ;
- obtenir, par consultation de la base de données, pour ledit au moins un segment de la représentation intermédiaire (604) du programme d'ordinateur la règle de transformation correspondant à l'entrée présentant la similarité la plus élevée selon la métrique ;
- appliquer (606) la règle de transformation correspondante audit au moins un segment de la représentation intermédiaire (604) du programme d'ordinateur afin d'obtenir une représentation intermédiaire transformée ;
- traduire (610) la représentation intermédiaire transformée du programme d'ordinateur en instructions machine en vue de leur exécution (612) par le processeur ;
**caractérisé par les étapes consistant à :**
- insérer, dans ledit au moins un segment, des instructions destinées à mesurer la performance d'exécution dudit au moins un segment ;
- mesurer la performance d'exécution dudit au moins un segment ;
- si la performance mesurée lors de l'exécution dudit au moins un segment est inférieure à un seuil prédéterminé, générer au moins une nouvelle règle de transformation afin d'améliorer la performance d'exécution dudit au moins un segment, la génération d'au moins une nouvelle règle de transformation pour ledit au moins un segment comprenant les étapes suivantes :
- définir un espace de règles de transformation admissibles (626) pour ledit au moins un segment ;
- définir un n-uplet de types de transformation possibles, les types de transformation correspondant aux dimensions dudit espace de règles de transformation admissibles ;
- mettre en correspondance les transformations spécifiques d'un type de transformation donné avec les valeurs de la dimension correspondante dudit espace ;
- de telle sorte qu'un vecteur dans ledit espace de règles de transformation admissibles corresponde à une règle de transformation, les transformations de chaque dimension étant appliquées dans l'ordre des dimensions dudit espace ;
- rechercher, au moyen d'une méthode de recherche, une nouvelle règle de transformation plus performante ;
- appliquer (606) la règle de transformation nouvellement générée audit au moins un segment de la représentation intermédiaire du programme d'ordinateur ;
- mesurer la performance d'exécution (612) dudit au moins un segment transformé par la règle de transformation nouvellement générée, lors de l'exécution du programme d'ordinateur compilé (610) sur le processeur ;
- en cas d'amélioration de la vitesse d'exécution et/ou de réduction de la consommation d'énergie, mettre à jour la base de données en y stockant la clé dudit au moins un segment et la règle de transformation nouvellement générée sous la forme d'une nouvelle entrée ;
- compiler le programme d'ordinateur en utilisant la règle de transformation nouvellement générée et/ou la base de données mise à jour.

2. Procédé selon la revendication précédente,
**caractérisé par les étapes consistant à :**
- traduire les segments de la représentation intermédiaire (604) du programme d'ordinateur en graphes de flot de contrôle et en graphes de flot de données, lesdits graphes comprenant chacun des nœuds et des arêtes ainsi que des annotations associées aux nœuds et aux arêtes ;
- calculer, pour chaque segment, un vecteur de caractéristiques constituant sa clé, ledit vecteur résumant des propriétés des graphes de flot de contrôle et des graphes de flot de données ;
- calculer la similarité entre deux segments représentés par deux clés correspondantes comme étant l'inverse d'une distance entre les deux vecteurs de caractéristiques.

3. Procédé selon l'une quelconque des revendications précédentes,
**caractérisé par l'étape consistant à**
fournir, pour chaque classe de processeurs, une base de données spécifique de règles de transformation connues pour des segments de programmes d'ordinateur en représentation intermédiaire, afin d'optimiser la performance d'exécution.

4. Procédé selon l'une quelconque des revendications précédentes,
**caractérisé par l'étape consistant à**
- stocker, dans une base de données de performances spécifique au processeur, les résultats des mesures de la performance d'exécution des segments sur ledit processeur.

5. Programme d'ordinateur comprenant des instructions qui, lorsque le programme est exécuté par un ordinateur, amènent ledit ordinateur à mettre en œuvre le procédé selon l'une quelconque des revendications de procédé précédentes.

6. Support lisible par ordinateur sur lequel est stocké le programme d'ordinateur selon la revendication immédiatement précédente.

7. Système destiné à mettre en œuvre le procédé selon l'une quelconque des revendications de procédé précédentes, comprenant :
- au moins un processeur client destiné à exécuter le programme d'ordinateur ;
- un compilateur (602) traduisant le code source du programme d'ordinateur en instructions machine destinées à être exécutées par le processeur client ;
- un serveur de base de données fournissant la base de données de règles de transformation connues pour des segments de programmes d'ordinateur en représentation intermédiaire, en vue de l'optimisation de l'exécution ;
- au moins un serveur d'évaluation comprenant un processeur correspondant audit au moins un processeur client ;
- l'étape de mesure de la performance lors de l'exécution dudit au moins un segment transformé par la règle de transformation nouvellement générée étant mise en œuvre sur le serveur d'évaluation.
